# EUROPEAN PATENT SPECIFICATION

(11) **EP 2 407 214 B1**
(45) Date of publication and mention of the grant of the patent: **02.11.2016**
(21) Application number: 11173492.7
(22) Date of filing: 11.07.2011
(51) Int. Cl.: A63B 22/16, A63B 69/18, A63B 22/20, G09B 19/00, A63B 71/00, A63B 22/00

(54) **SKI SIMULATOR**
SKI-SIMULATOR
SIMULATEUR DE SKI

(30) Priority: 12.07.2010 IT TV20100097
(43) Date of publication of application: 18.01.2012
(73) Proprietor: Giani, Marco, 31044 Montebelluna (TV) (IT)
(72) Inventor: Giani, Marco, 31044 Montebelluna (TV) (IT)
(74) Representative: Citron, Massimiliano

(56) References cited:
- WO-A1-01/70346
- WO-A1-2010/013073
- DE-A1- 2 503 728
- US-A- 3 107 914
- US-A- 3 912 260
- US-A- 4 607 839
- US-A1- 2005 209 058

## Description

The invention relates to a ski simulator.

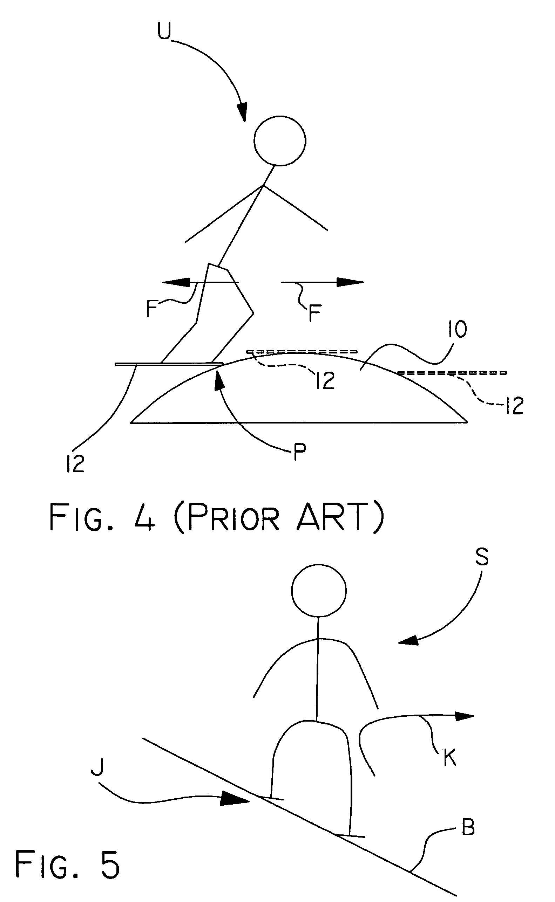

For downhill skiing simulators are known that are used to simulate in the gym or at home the technical movements of modem skiing, for example. CA2135806, US5749811, US 31079147 and US5372384. The evolution of equipment and carving skis demands movements and load positions of the foot-leg area and the pelvis-body part thanks to which one gets the real control of the ski on slope, during the whole arc of a curve. Other known simulators - see Fig. 4 - consist of a base 10 fixed to the ground and an oscillating platform 12. The base 10 is curved with the convexity facing the user's feet, and on its curvature there is mounted slidingly the platform 12. The exercise is to swing the platform 12 to the right and left on the base 10 (see arrows F), overcoming the effort to climb the bump the base 10 has at its center. Other positions of the platform 12 are shown hatched. These simulators inherently induce a counterproductive and harmful error to many skiers: the load on the internal leg and the wrong rotation of the body. The load of the body is inevitably at the point P, i.e. on the nearest foot to the center of the base 10, to get a thrust that makes the platform 12 rise up along the slope of the base 10.

Instead, the proper ski theory requires at P the contrary, i.e. to lighten the load. In Fig. **5** a skier S skiing on a slope B is shown. Let us assume that the skier S wants to turn with the direction of the arrow K, i.e. toward the valley. Clearly, the load to give the skis will be higher on the foot J, i.e. the outermost one with respect to the center of rotation.

It is clear then that the known simulators can train the body but do not improve the technique.

US 3 912 260 relates to apparatus for simulating Alpine or downhill snow skiing. 1. The apparatus comprises a pair of skis, and a structural mechanism for moving the skis with respect to four different and independent axes.

The main object of the invention is to improve this state of the art. Another object is to make a ski simulator able to simulate the real efforts needed during skiing. Another object is to make a ski simulator capable of improving the skiing technique. Another object is to make a ski simulator simple to use and build.

These objects are achieved by a ski simulator comprising the features of claim 1.

With this simulator the practitioner actually does an exercise that simulates the movements required in real skiing, because he loads the outermost leg during a curve and the realism is improved and the effort increases if the platforms are connected to the base also slidingly, so that the oscillation axis of each can move parallel to the swing direction of the base.

Preferably the simulator comprises means for adjusting the width of the sliding stroke of the platforms with respect to the base, useful for example to adjust the effort or avoid the stalemate of the simulator on one side. Another advantage is that if the practitioner moves too much his center of gravity in the direction of the swing/rocking, to move back into position he has to move the body while it is preferable that he works only with the lower limbs, especially the feet.

To servo-assist the movements there can be elastic means between the platforms adapted to elastically return o push them in the starting position, i.e. central position, of the swing (base not-tilted). The elastic means can be e.g. springs or pistons, and can also be mounted at the ends of the stroke or of the guide of the platforms, this time acting to push them toward the center of the stroke.

As a variation the base can have an empty concavity with a linear guide therein to slidingly drive the platforms. The linear guide can comprise, for example, parallel bars on which skids can slide. The skids can be contained in the curved base or project outside it, so as to act as limiting elements for the oscillation of said base when they hit the ground.

The invention and its advantages will be more clear from the following description of a preferred embodiment, illustrated in the drawings in which
Figure 1 shows a side view of a simulator according to the invention in a first operating configuration;
Figure 2 shows a side view of the simulator of Fig. 1 in a second operating configuration;
Figure 3 shows a sectional view according to the plane III-III of fig. 1;
Figure 4 shows a schematic view of a well-known ski simulator;
Figure 5 shows a schematic rear view of a skier on a slope while curving.

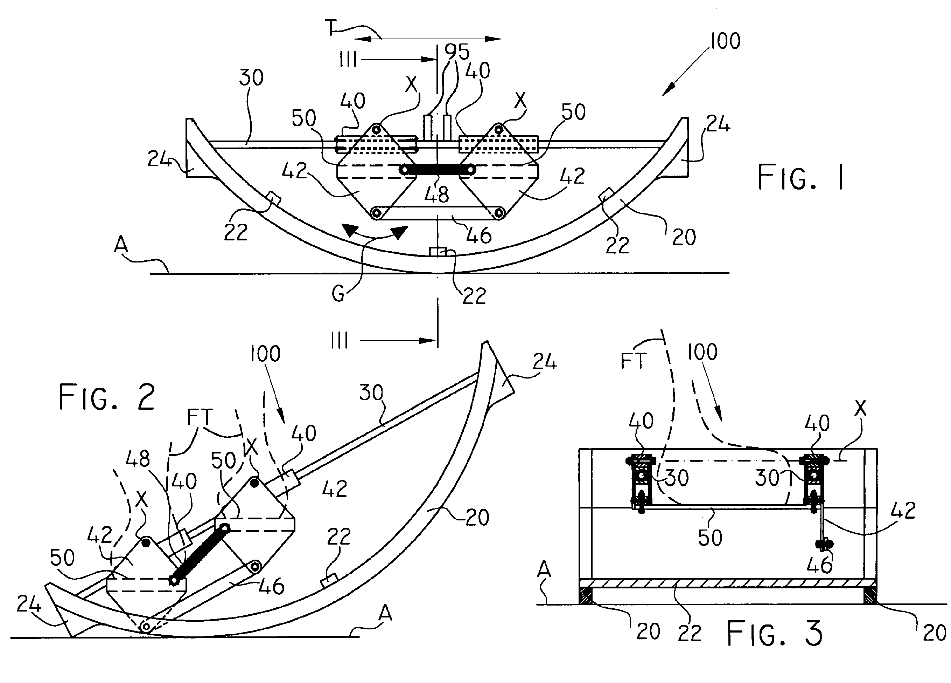

With 100 in Figures 1-3 is shown a simulator according to the invention, which has substantially a symmetrical structure. It comprises an arched base formed by two identical tubes or rods or curved elements 20 and a post for the user's feet (indicated by hatching and FT). The tubes 20 are rigidly maintained on two parallel planes by two transverse longitudinal members 22. The resulting structure, which in practice is a frame or lattice, is similar to that of a cradle or a swing, and has an empty space inside it. Therefore, the arched base is capable of swinging on a support plane A.

Between the ends of each tube 20 is fixed a guiding rod 30 on which are slidingly mounted skids 40, two in a row for each rod 30. For greater constructional compactness the guides 30 are placed within the concavity defined by the tubes 20. On each skid 40 there is hinged, for example by pins, about a pivot axis X a plate 42 (see oscillation indicated by arrows G). The X axis is perpendicular to the planes - parallel to each other - that contain the tubes 20, or in general the X axis is perpendicular to the rocking direction of the curved base. The plate 42 is preferably hinged at one end of its, and extends below its own skid 40 hanging from it. A plate 42 supports, along with a homologous plate on the other rod 30, a platform 50 on which a user can rest his foot. Two plates 42, which slide on the same rod 30, are connected, preferably at an end thereof, by a rigid arm or bar 46. It is sufficient that there is just one arm 46 on two plates 42 placed side by side, but one can use two, one for each pair of near plates 42.

The plates 42, the arm 46 and the pivoting about the X axis form an articulated parallelogram, which serves to keep always parallel to each other the platforms 50 and to make them move in a coordinated manner. One e.g. can think of other synchronization mechanisms and/or spatial coordination, such as controlled electric and pneumatic actuators to impose the desired direction to the plates 42. Optionally between two plates 42 placed side by side an elastic means or spring 48 can be connected, to pull the plates 42 against one another and facilitate the movements to the user, especially the return in the center of the arched base.

The simulator 100 operates as follows.

The user puts his feet on the two support bases 50 (one for the right foot and one for the left one). The platforms 50 - and thus the feet - can move with two motions:
- straight, along the rods 30 thanks to the sliding of the skids 40 (see arrows T);
- oscillating, about the X axis and with respect to the skids 40 (see arrows G).

By varying the load on the feet the user makes the arched base rock from one side to the other (see Fig. 2) and the skids 40 will move downwards as a result, at the side of the rods 20 that lowered. Plugs or elastic or cushioning abutments 24 prevent both an unpleasant collision if the ends of the rods 20 touch the plane A, and the (very unlikely) overturning of the arched base. A high elasticity for the abutments 24 can also generate a reverse thrust that helps the user to raise again the arched base.

The free oscillation of the plates 42 about the X axis keeps the feet of the user substantially perpendicular to the support plane A and parallel to each other, thereby perfectly simulating the condition of skiing. Note how the simulator 100 allows the simulation of the incidence angle of the ski on the snow. The platforms 50 are the support point for the correct position of the loads, i.e. the leg external to the curve (the lowermost leg) is the loaded one, for a good mechanical movement of the legs and better balance. The elastic means 48 can help an untrained user to move from one side to the other the skids 40, as their elastic return generates an elastic force tending to bring the plates 42 back in the starting position, towards the center of the rods 20 and guides 30.

Side grips for the hands, placed at the bottom of the simulator and/or integral with the support plane A, allow preparatory exercises to improve the angle position of the legs/pelvis block and the lateral compensation of the body. As production materials, the simulator 100 can use for the rods 20 and the main components e.g. iron, aluminum, wood, plastic and composite fibers. To make it easy to dismantle the simulator 100 it is preferable that the elements 20 and/or side members 22 and/or guides 40 be interconnected to each other by non-permanent fastening means, so as to mount and reassemble quickly the bulky structure of the simulator.

In place of the lattice structure of the arched base, one can use e.g. even a continuous wood, plastic or metal vault.

Experimentally it has been observed that the best response and simulation results are obtained when the surface of the arched base that engages the support surface A has a section like an arc of circumference and, in particular, when it is a semi circumference. In this last case there is a greater range of swing and the user is bound to load correctly the external leg. The stroke of the skids 40 on the guide 30 can be adjustable in order to adjust the width of the lateral displacement for the user and/or to prevent a standstill of immobility when the base 20 is very tilted. Adjusting means can be e.g. stoppers or stop runners 95 lockable on the guide 30 in the desired locations (see Figure 1). The skids 40 meet the stoppers 95 and their movement is interrupted at the desired point.

## Claims

1. Ski simulator (100) comprising
- an arched base (20) for engaging a ground support plane (A) with a curved surface
the surface having concavity facing upward,
so that the surface can rock and roll on the support plane from one side of its to the other returning toward its center,
- two platforms (50), each capable of supporting a foot of a user, that are
- pivotably connected to the base so as to oscillate around an oscillation axis (X), said axis being perpendicular to the rocking direction (T) of the base **characterized in that**, said two platforms are also connected slidingly to the base so that the oscillation axis (X) of each can move parallel to the rocking direction (T) of the base,
the platforms being configured so as to remain substantially parallel to the support plane when the user, by varying the load on the feet,
makes the arched base rock.

2. Simulator according to claim 1, comprising means for adjusting the width of the sliding stroke of the platforms with respect to the base.

3. Simulator according to claim 1 or 2, comprising
- a linear guide (30) connected to the base and oriented parallel to the rocking direction,
- sliding-connection means (40, 42) adapted to slidingly connect the platforms (50) to the guide.

4. Simulator according to claim 3, wherein the sliding-connection means comprise
two skids slidable on the linear guide, to each skid being rotatably pivoted a platform, and
a mechanism adapted to constrain the two platforms so that they always remain parallel to the support plane.

5. Simulator according to claim 4, wherein said mechanism comprises a rigid element hinged on both platforms, so that they constitute two opposite branches of an articulated quadrilateral.

6. Simulator according to any one of the preceding claims, wherein said base is formed by a lattice structure comprising two curved tubes or rods fixed to each other on two parallel planes by transverse elements.

7. Simulator according to claim 6, comprising non-permanent fastening means between the curved tubes or rods and the transverse elements.

8. Simulator according to any one of the previous claims 1 to 7, wherein said base is formed by a continuous vault, preferably made of wood.

9. Simulator according to any one of the previous claims 3 to 8, wherein the linear guide projects from the base along the rocking direction.

10. Simulator according to any one of the previous claims 3 to 9, comprising elastic means between the platforms adapted to elastically return o push them in the starting position.

11. Simulator according to any one of the previous claims 3 to 10, comprising elastic means mounted at the end of the stroke or guide of the platforms, acting to push them toward the stroke center.

## Patentansprüche

1. Der Skisimulator (100) beinhaltet:
Eine gewölbte Basis (2), um eine Grundträgerplatte (a) mit gekrümmter Oberfläche einzulegen;
Die Oberfläche hat eine nach oben zeigende Wölbung;
damit die Oberfläche auf der Tragfläche von einer zur anderen Seite, über deren Mitte, schaukeln und rollen kann;
Zwei Plattformen (50), die jeweils einen Fuß eines Nutzers tragen können;
Diese Plattformen sind Drehbar mit der Basis verbunden;
Dadurch können sie um die Schwungachse (X) schwingen, Diese Achse liegt lotrecht zur Schaukelrichtung (T) der Basis, ***dadurch kennzeichnet, dass***
*auch die* besagten zwei Plattformen gleitend an die Basis angeschlossen sind. Dadurch kann sich die Schwungachse (X) jeder Plattform parallel zur Schaukelrichtung (T) der Basis bewegen;
Die Plattformen wurden so gebaut, dass sie im Wesentlichen parallel zur Trägeroberfläche bleiben, wenn der Nutzer durch Veränderung der Last am Fuß den bogenförmigen Schwung ausführt.

2. Der Simulator Gemäß Anspruch 1 besitzt der Simulator Mittel zur Breiteneinstellung des Gleithubs der Plattformen in Bezug auf die Basis.

3. Der Simulator besitzt gemäß Anspruch 1 oder 2:
- Eine Linearführung (30), die mit der Basis verbunden und parallel zur Schaukelrichtung ausgerichtet ist.
- Gleitende angepasste Verbindungsmittel (40,42) für eine gleitende Verbindung der Plattformen (50) mit den Führungen.

4. Simulator gemäß Anspruch 3, worin die Gleitverbindungsmittel zwei Gleitkufen auf den Linarführungen miteinschließen. Auf jeder Gleitkufe ist eine drehbar gelagerte Plattform befestigt. Des Weiteren ist ein Mechanismus vorhanden, der dafür sorgt, dass die zwei Plattformen immer parallel zur Trägerfläche stehen.

5. Simulator gemäß Anspruch 3, worin besagter Mechanismus ein starres Element beinhaltet, das auf beiden Plattformen so eingehängt ist, dass sie zwei gegenüberliegende Arme eines Gelenkvierecks bilden.

6. Simulator gemäß eines der vorhergehenden Anspruche, worin besagte Basis aus einer Gitterstruktur geformt ist, die zwei gekrümmte Rohre oder durch Querelemente miteinander befestigte Stäbe auf zwei parallelen Ebenen beinhaltet.

7. Simulator gemäß Anspruch 6, einschließlich keiner dauerhaften Befestigungsmittel zwischen den gekrümmten Rohren oder Stangen und den Querelemeten.

8. Simulator gemäß eines der vorhergehenden Anspruche 1 bis 7, worin besagte Basis durch ein gleichmäßig geformtes Gewölbe geformt wird, das vorzugsweise aus Holz besteht.

9. Simulator gemäß eines der vorhergehenden Anspruche 3 bis 8, worin die Linearführung von der Basis entlang der Schaukelrichtung hervorragt.

10. Simulator gemäß eines der vorhergehenden Anspruche 3 bis 9, einschließlich elastischer Mittel zwischen den Plattformen, die für eine elastische Rückführung angepasst sind, oder diese in die Startposition zurückdrücken.

11. Simulator gemäß eines der vorhergehenden Anspruche 3 bis 10, einschließlich elastischer Mittel, die am Ende des Hubs oder auf den Führungen der Plattformen montiert sind; sie dienen dazu, dass diese durch die Hubmitte gedrückt werden.

## Revendications

1. Simulateur ski (100) comprenant :
- Une base arquée (20) pour obtenir un plan de support solide (a) avec une surface cintrée
- La surface a une concavité tournée vers le haut,
afin que la surface puisse osciller et basculer sur le plan de support d'un côté à l'autre en retournant vers son centre ;
- Deux plateformes (50), chacune en mesure de supporter un pied d'un utilisateur et qui sont
raccordées de manière pivotante à la base de manière à osciller autour d'un axe d'oscillation (X). Cet axe est perpendiculaire au sens de roulis (T) de la base **caractérisée par le fait que** ces deux plateformes sont aussi raccordées par coulissement à la base de manière à ce que l'axe d'oscillation (X) de chacune puisse se déplacer parallèlement au sens de roulis (T) de la base,
les plateformes étant configurées de manière à rester essentiellement parallèles au plan de support quand l'utilisateur, en changeant la charge sur les pieds, fait basculer la base cintrée.

2. Simulateur conforme à la revendication 1, comprenant des dispositifs de réglage de la largeur de la course de coulissement des plateformes par rapport à la base.

3. Simulateur conforme aux revendications 1 et 2, comprenant :
- Un rail linéaire (30) raccordé à la base et orienté parallèlement à la direction de roulis,
- Dispositifs de connexion par coulissement (40, 42) adaptés pour raccorder les plateformes (50) au rail, par coulissement.

4. Simulateur conforme à la revendication 3 dans lequel le dispositif de raccordement par coulissement comprend :
deux patins coulissants sur le rail linéaire et chaque patin est une plateforme pivotant par rotation et,
un mécanisme servant à contraindre les deux plateformes à rester toujours parallèles au plan de support.

5. Simulateur conforme à la revendication 4 où le mécanisme comprend un élément rigide fixé par des charnières sur les deux plateformes afin de former deux branches opposées d'un quadrilatère.

6. Simulateur conforme à l'une ou l'autre des revendications précédentes où la base est formée par une structure réticulaire comprenant deux barres ou tubes cintrés fixés l'un à l'autre sur deux plans parallèles par des éléments transversaux.

7. Simulateur conforme à la revendication 6, comprenant un dispositif de fixation non permanent entre des barres ou tubes cintrés et les éléments transversaux.

8. Simulateur conforme à l'une ou l'autre des revendications précédentes de 1 à 7, où la base est formée par une voûte continue, réalisée, de préférence, en bois.

9. Simulateur conforme l'une ou l'autre des revendications précédentes de 3 à 8, où le rail linéaire se projette de la base tout au long de la direction de roulis.

10. Simulateur conforme à l'une ou l'autre des revendications précédentes de 3 à 9, comprenant des dispositifs élastiques montés entre les plateformes adaptés pour retourne élastiquement ou les pousser dans la position de départ.

11. Simulateur conforme à l'une ou l'autre des revendications précédentes de 3 à 10, comprenant des dispositifs élastiques montés sur la fin de la course ou du rail des plateformes, agissant pour les pousser vers le centre de la course.
